# EUROPEAN PATENT SPECIFICATION

(11) **EP 3 456 085 B1**
(45) Date of publication and mention of the grant of the patent: **11.08.2021**
(21) Application number: 16781929.1
(22) Date of filing: 28.09.2016
(51) Int. Cl.: H04W 28/24, H04W 28/02

(54) **MECHANISMS FOR AVOIDANCE OF EXPLICIT QUALITY OF SERVICE SIGNALING OVER THE RADIO INTERFACE**
MECHANISMEN ZUR VERMEIDUNG EINER EXPLIZITEN DIENSTGÜTESIGNALISIERUNG ÜBER EINE FUNKSCHNITTSTELLE
MÉCANISMES POUR ÉVITER LA QUALITÉ EXPLICITE DE SIGNALISATION DE SERVICE SUR UNE INTERFACE RADIO

(30) Priority: 13.05.2016 US 201662336424 P
(43) Date of publication of application: 20.03.2019
(73) Proprietor: Apple Inc., Cupertino, CA 95014 (US)
(72) Inventor: STOJANOVSKI, Alexandre, Saso, 75020 Paris (FR); PALAT, Sudeep, K., Cheltenham Gloucestershire GL51 0GG (GB)
(74) Representative: Lang, Johannes
(86) International application number: PCT/US2016/054151
(87) International publication number: WO 2017/196386

(56) References cited:
- WO-A1-2012/048290
- CA-A1- 2 934 183
- US-A1- 2015 264 596
- 3gpp Etsi: "3rd Generation Partnership Project; Technical Specification Group Services and System Aspects; Study on Architecture for Next Generation System (Release 14)", , 14 March 2016 (2016-03-14), pages 1-52, XP055331587, Retrieved from the Internet: URL:www.etsi.org [retrieved on 2016-12-23]
- "3rd Generation Partnership Project; Technical Specification Group Services and System Aspects; Study on Architecture for Next Generation System (Release 14)", 3GPP DRAFT; 23799-050_RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 8 June 2016 (2016-06-08), XP051115880, Retrieved from the Internet: URL:http://www.3gpp.org/ftp/tsg_sa/WG2_Arc h/Latest_SA2_Specs/Latest_draft_S2_Specs/ [retrieved on 2016-06-08]

## Description

### REFERENCE TO RELATED APPLICATIONS

This application claims the benefit of U.S. Provisional Application No. 62/336,424 filed May 13, 2016, entitled "MECHANISMS FOR AVOIDANCE OF EXPLICIT QUALITY OF SERVICE SIGNALING OVER THE RADIO INTERFACE".

### FIELD

The present disclosure relates to quality of service (QoS) signaling, and more specifically, to avoiding explicit QoS signaling over the radio interface.

### BACKGROUND

In a conventional public land mobile network (PLMN), such as according to the 3rd Generation Partnership Project (3GPP), various radio access networks (RANs), such as a General Packet Radio Subsystem Evolved Radio Access Network (GERAN), a Universal Mobile Telecommunications System Terrestrial Radio Access Network (UTRAN), and an Evolved-UTRAN (E-UTRAN) may be connected to a common core network and provide various services. For example, GERAN or UTRAN may provide voice services, solely or in part, while E-UTRAN, by contrast, may provide packet services, either solely or in part.

In some instances, multiple applications can be concurrently executing on a user equipment (UE), each application having different quality of service (QoS) requirements. For example, a UE can be engaged in a voice call while at the same time browsing a webpage or downloading a file. The voice call can have more stringent requirements for QoS in terms of delay and delay jitter than web browsing or file downloading. In order to support multiple QoS requirements, different bearers are established within the long term evolution (LTE) Evolved Packet System (EPS), each being associated with a QoS. The bearers are commonly known as EPS bearers. 3GPP TR 23.799 V0.3.0: "3rd Generation Partnership Project; Technical Specification Group Services and System Aspects; Study on Architecture for Next Generation System (Release 14)" discloses a system architecture for the next generation mobile networks. The new architecture shall support at least the new RAT(s), the evolved LTE, non-3GPP accesses and minimize access dependencies.

WO 2012/048290 A1 discloses systems, methods, and devices for providing uplink traffic differentiation support in hybrid networks including 3GPP and non-3GPP. The method includes receiving, using signaling involved in establishing a cipher tunnel, traffic classification information and associated quality of service marker information. The method further includes determining, based upon the traffic classification information, that a data packet is associated with a traffic classification. A quality of service marker is included within the data packet. The quality of service marker is associated with the traffic classification.

US 2015/264596 A1 discloses a method and apparatus of dynamically operating a bearer in a wireless communication system. The bearer operating method of an evolved Node B includes: setting a dynamic bear for user equipment where a bit rate is dynamically adjustable; receiving a report message, including channel status and/or video buffer status of the user equipment, from the user equipment; determining a modified bit rate to be applied to the dynamic bearer and time information to which the modified bit rate is applied; and transmitting the modified bit rate and the time information to the user equipment.

### BRIEF DESCRIPTION OF THE DRAWINGS

FIG. 1 is a block diagram illustrating a mobile network according to various aspects disclosed.
FIG. 2 is a block diagram illustrating a block diagram of a mobile network architecture for according to various aspects disclosed.
FIG. 3 is a data flow illustrating QoS signaling procedure according to various aspects disclosed.
FIG. 4 is a block diagram illustrating a mobile network according to various aspects disclosed.
FIG. 5 is a flow diagram illustrating a method for a circuit-switched fallback procedure according to various aspects disclosed.
FIG. 6 is a schematic example of a wireless environment that can operate in accordance with aspects disclosed.
FIG. 7 illustrates an example system or network device for operating QoS signaling according to various aspects or embodiments.
FIG. 8 is an illustration of an example wireless network platform to implement various aspects disclosed.

### DETAILED DESCRIPTION

The invention is defined by the independent claims. Preferred embodiments are described by the dependent claims.

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor, a process running on a processor, a controller, a circuit or a circuit element, an object, an executable, a program, a storage device, a computer, a tablet PC and/or a mobile phone with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components or elements without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising".

### OVERVIEW

In consideration of the above described deficiencies of wireless communication systems, various aspects are described for avoiding explicit QoS signaling over a radio interface. By enabling UEs to switch QoS parameters or make QoS requests based on a per packet basis or packet flow without having to make explicitly signaled requests to the network or eNB, then signaling overhead can be reduced along with the objective of minimizing explicit QoS signaling over the radio. For example, the eNB or other network device can establish a set of pre-authorized QoS rules or associated parameters / markings so that as long as the UE or applications within the UE are within these pre-authorized QoS rules, the UE can operate with different QoS parameters without first establishing a new EPS bearer or radio bearer therein. As such, the applications on the UE can decide the QoS for their data packets and operate accordingly without further permissions or additional network bearer binding operations, where packets are bound by a network device via layer 3 communication means onto bearers or pipes within the signaling. Bearer binding can be performed by the UE for uplink (UL) traffic and by the packet data network gateway (PDN) gateway, or user plane function, for traffic in the downlink (DL).

In contrast to a bearer based communication approach with bearer binding, a flow based approach can be utilized with pre-authorization of QoS rules and related parameters. Here, transmissions only utilize one large pipe or bearer in between the UE and a Next-Generation (NG) (e.g., NG 6) reference point / interface beyond the radio network or eNB to the core network. The user plane, for example, can add a flow priority indicator (FPI) as a tag on a packet-by-packet or packet flow basis in the NG encapsulation header. This FPI tag can operate to indicate to any component along the user plane path the particular QoS treatment to be applied. If it has been pre-authorized, the UE can immediately initiate using the QoS without first obtaining a response or signaling an intent for the QoS to be serviced.

In an aspect, the pre-authorized QoS rules can include pre-authorised FPIs or another parameter, for example, that the UE can implicitly initiate a new radio bearer with a different radio beaer, or operate as if a different radio bearer had been established if the UE desires to send data with a different FPI than was provided by an existing established radio bearer (RB) at any time. The UE thus establishes a different RB if it wants to send data with a different FPI than what is provided by the existing RBs. A UE can include the applied FPI in the packet data convergence protocol (PDCP) header, a radio link control (RLC) header, or a media access control (MAC) header of an uplink data unit. The UE could also include an indication of whether a "reflective QoS" is desirable, or in other words an indication of whether the UE desires for the corresponding DL flow to be handled by the eNB with the same QoS as the UL flow that has been modified or adjusted to a different FPI parameter by the UE. Additional aspects and details of the disclosure are further described below with reference to figures.

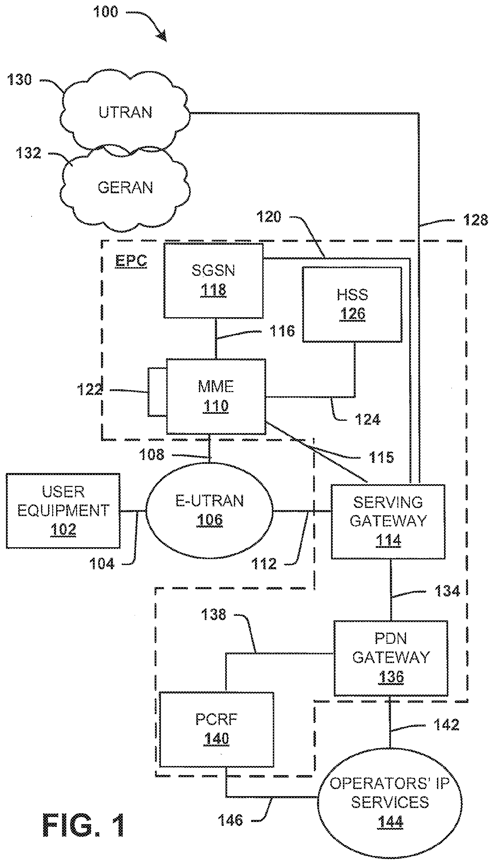

Referring to **FIG. 1****,** illustrated is an example of a mobile network communication system in accordance with various aspects being described. In various examples, a mobile network 100 can comprise an evolved packet core (EPC) network supporting, without limitation, GERAN, UTRAN, and/or E-UTRAN. UE 102 (Mobile Station (MS)) is communicatively coupled via a radio interface 104 (e.g., LTE-Uu) to an E-UTRAN 106 system. The E-UTRAN 106 can be communicatively coupled via a S1-MME (Mobility Management Entity) link 108 to a MME 110 and via a S1-U link 112 to a Serving Gateway 114. The MME 110 can be directly connected to the Serving Gateway 114 via an S11 link 115 and can be connected via a S3 link 116 to a Serving General Packet Radio Subsystem Support Node (SGSN) 118, which is itself connected via an S4 link 120 to the Serving Gateway 114. The MME 110 can include an internal S10 link 122 and an Sha link 124 to a Home Subscriber Service (HSS) node 126.

The Serving Gateway 114 may be connected via an S12 link 128 to one or more UTRAN 130 and GERAN 132 networks. The Serving Gateway 114 may further be connected via an S5 link 134 to a public data network (PDN) gateway 136. The PDN gateway 136 may be connected via a link 138 to a policy and changing rules function (PCRF) node 140 and via a SGi link 142 to an operator's IP services 144, such as an IP Multimedia Subsystem (IMS). The PCRF node 140 may be connected to the operator's IP services 144 via a link 146.

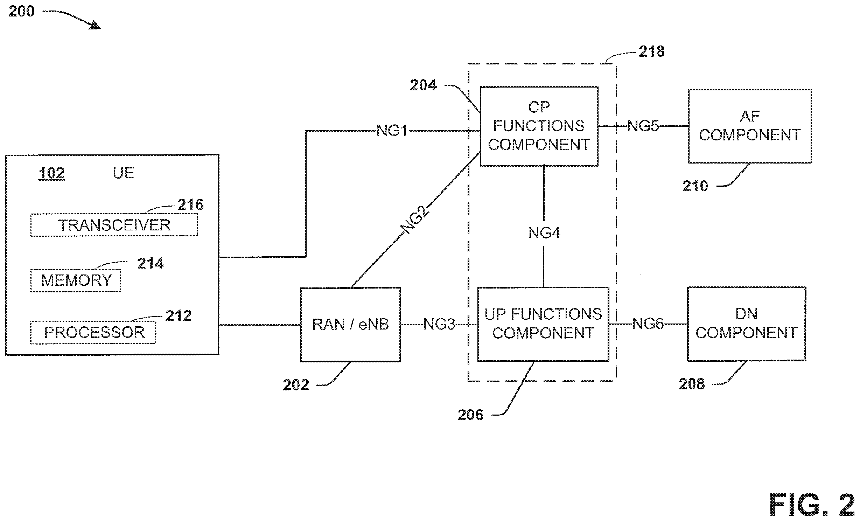

**FIG. 2** is a block diagram of a mobile network architecture 200 for a next generation (NextGen) 5G system in accordance with various aspects herein for enabling pre-authorized QoS rules, including related QoS parameters or markings. The architecture 200 can operate with respect to the mobile network 100, a NextGen core network / radio access network (RAN) based on a 5G radio access technology (RAT) 218 (also known as New Radio (NR) Access Technology in 3GPP TR 38.912), or both in conjunction. The UE 102 can be communicatively coupled to a RAN cell 202 via a radio interface therebetween and to a control plane (CP) function component 204 of the 5G network 218 via a reference point or NextGen interface NG1. The RAN 202 is coupled to the CP functions component 204 via the reference point / NextGen interface NG2 and to the user plane (UP) functions component 206 via the reference point NG2. The NextGen core network 218 can be coupled among a CP partition at the CP functions component 204 and a UP partition at the UP functions component 206 via the reference point NG4. The CP functions component 204 is further coupled to an application functions (AF) component 210 and the UP functions component is coupled to a data network (DN) component 208.

The UE 102 includes a wireless transceiver 210, a processor 212, and electronic memory 214 including a register. The transceiver 210 is configured to communicate with the RAN 202 and the NextGen core network 218 at the CP functions 204. The processor 212 is configured to control, at least in part, an operation of the UE 102 generally and the components 210, 214 thereof. The processor 212 can be a microprocessor, a controller, or other dedicated hardware, as known in the art. The electronic memory 214 can be or include registers implemented according to any of a variety of electronic memory or other technologies suitable for implementing data registers known in the art.

The RAN 202 can refer to a radio access network based on the 5G RAT or Evolved E-UTRA that connects to the NextGen core network. The network architecture 200 can operate according to the different reference point names, which interface between different functions / components. NG1 is a reference point between the UE 102 and the CP functions 204 of the NextGen core network 218 and is used to carry the Non-access stratum (NAS) protocol. Access stratum (AS) is term to refer to any communication between the UE 102 and RAN 202, where the NAS layer is established between the UE 102 and beyond to the core network 218 or further. The NG2 reference point is between the RAN 202 and the CP functions 204, and the NG3 reference point between the RAN 202 and the UP functions 206 of the NextGen Core Network 218. The NextGen core network 218 can be split into CP functions 204 and UP functions 206, in which the CP functions 204 are similar to those functions of the mobility management entity (MME) in 4G architectures as a control node for access network signaling (e.g., the MME 110). The UP function 206 is similar to the user plane part of the so called serving gateway 114 and the PDN gateway 136 in 4G architectures, for example. NG4 is the reference point between the CP functions 204 and the UP functions 206. The NG5 reference point is between the CP functions 204 and an Application (Server) Function 210. The NG6 reference point is between the UP functions 206 and the DN 208, which can be similar to the LGi reference point, in which in case of IP based communications designates the ingress point into the IP network, so the data network in case of IP communication can be an IP based network. NG6 is the ingress point so between the UE 102 and NG6 there is some kind of mobile network specific communication, and from NG 6 and beyond is purely IP based layer communication.

The architecture 200 can vary from the architecture 200 so that it is not bearer based but flow based. In bearer based signaling, any QoS level in 4G has to be supported by the UE 102 and any NG6 ingress point. A layer within the communication is constructed, which refers to the EPS bearer, and is similar to a small pipe between the UE 102 and the NG6 reference point corresponding to a specific QoS level. If there is a need to support multiple QoS levels, multiple QoS bearers or pipes can reach the reference point, where some signaling is used on NG1, NG2 and NG4. Using NG1 also implies signaling over the radio interface because this reference point at least partially goes over the radio, which is between the UE and the RAN 202.

In one embodiment, the signaling across the reference points for altering QoS levels or parameter values for non-guaranteed bit rate (GBR) traffic can be flow based with pre-authorized QoS rules being preconfigured either via the eNB at the RAN 202 or external network layer. GBR traffic needs a guaranteed bit rate, opposed to non-GBR traffic, which does not need a guarantee for operation by the requesting component (e.g., a UE component or application of the UE 102). As such, a lot of potential can be enabled to reduce or minimize this signaling by the architecture 200 operating a flow (or packet) based QoS model. The terms flow-based or packet-based as a QoS network model can be used interchangeably.

In another embodiment, the pre-authorized QoS rules can include a set of QoS parameters that can be assumed to be used, or modified therein by the UE 102 without any prior or explicit signaling. For example, a flow priority indicator (FPI) can be utilized as one such parameter with range or values that are pre-authorized and define the priority for flow treatment in the UP functions component 206 and in the RAN 202. The FPI corresponds to scheduling priority and priority handling in case of congestion, functioning similarly to the QoS Characteristics Indicator (QCI) in EPS. Network devices can utilize the QCI for establishing / modifying the EPS bearer between the UE 102 and the NG6 reference point, or equivalent in 4G. The QCI associated with a specific QCI level or value so all packets need to be handled with this specific QCI and sent in the specific pipe or EPS bearer in the network communications.

In a particular aspect, a QoS parameter such as the FPI can be utilized similarly as a QCI for packet based flows in NextGen networks. Rather, than bearer binding functionalities, which involves binding the packets as part of layer 3 communication means onto communication pipes carrying user traffic, such as EPS bearers establishing different sessions. Bearer binding is performed by the UE for UL traffic and by the PDN gateway or in this case the user plane function for all the traffic going in the DL. The FPI herein in contrast can be utilized in a flow based model approach involving a single pipe in between the UE and the NG6 reference point. In the UP functions component 206 on a packet by packet basis in the NG encapsulation header (e.g., NG3, and beyond with NG6). The FPI can be added to the header during encapsulation as a tag or FPI tag, for example. This tag on a packet by packet basis indicates to each component along the user plane path what the QoS is to be applied to the packets.

The set of QoS parameters that can be associated with a specific traffic flow can comprise the Flow Priority Indicator (FPI), Flow Descriptor, Maximum Flow Bitrate (MFB), Guaranteed Flow Bitrate (GFB), Flow Priority Level (FPL), or Session Bitrate. The FPI defines priority per flow treatment at UP functions 206 and RAN 202. It corresponds to scheduling priority as well as priority handling in case of congestion. The FPI also indicates whether the traffic or data flow requires a guaranteed flow bitrate or a maximum flow bitrate, which functions similar to QCI or QCI priority / levels in EPS. The flow descriptor includes one or more packet filters associated with that specific flow treatment. The MFB can be a UL / DL bitrate value(s) that is applicable for a single flow or aggregation of flows. This indicates a maximum bitrate authorized for the data flow, as similar to MBR in EPS. The GFB can be a UL / DL bitrate value(s) that is applicable for a single flow or aggregation of flows, and indicates a guaranteed bitrate authorized for the data flow, as similar to GBR in EPS. The FPL defines the flow's relative importance for access to RAN resources, as similar to allocation and retention priority (ARP) in EPS. Session Bitrate can be a UL / DL bitrate value applicable for the established PDU Session. It indicates maximum bitrate authorized for the PDU Session, as similar to APN-AMBR in EPS.

The QoS parameters can be applied/enforced (asterisks implying application and empty cells not) according to one embodiment as summarized below in Table 1:

| **QoS parameters** | | **UP functions** | **AN** | **UE** |
|---|---|---|---|---|
| Flow Priority Indicator (FPI) | | * | * | * |
| Flow Priority Level (FPL) | | | * | |
| Flow Descriptor | DL | * | * | |
| | UL | | * | * |
| Maximum Flow Bitrate (MFB) | DL | * | | |
| | UL | | * | |
| Guarantee Flow Bitrate (GFB) | DL | | * | |
| | UL | | * | * |
| Session Bitrate | DL | * | | |
| | UL | | * | |
| | | | | |

The QoS signaling can operate as a flow-based model for non-GBR traffic, and differently with GBR traffic (e.g., as a bear-based) as traffic requesting GBR implies a guaranteed bit rate for a bearer to be established ahead of time, which can also be subject to connection or admission control. In case of congestion, for example, the RAN 202 can refuse any new request that requires a GBR. However, for non-GBR anything that is elastic from zero to any bit rate, for example, like web traffic, the network can regularly use this kind of user plane packet signaling with FPI. For DL the process flow for the network can regularly solve this problem by establishing these pipes between UE and NG6, but the embodiments can be applicable herein to UL traffic. In order to perform the bearer binding functionality, the UE 102 can be provided with packet filters, also known as traffic flow templates (TFTs), in which these terms can be used interchangeably. The packet filters can comprise information that enables the UE 102 to identify IP packets that can be provided in the form of an IP5 template, for example. Additionally, there can be one or more priority lists of EPS bearer IDs. Thus, when the UE 102 receives an uplink packet of an application running in the UE 102, it can go through the matching process to see if there is any packet filter that corresponds to this packet. If there are multiple such packet filters that match the UL packet, it can process through the priority list of the EPS bearer IDs and selects the EPS bearer ID that is first in the list so that the UE performs the bearer binding.

If the network or an associated network device tells the UE 102 how to apply the FPI packet traffic flow in the UL then some signaling will occur, which can be the NG1 signaling that also applies signaling over the radio. To avoid or minimize this type of signaling, the network minimizes the signaling over the radio in particular for non-GBR traffic as detailed in aspects or embodiments herein.

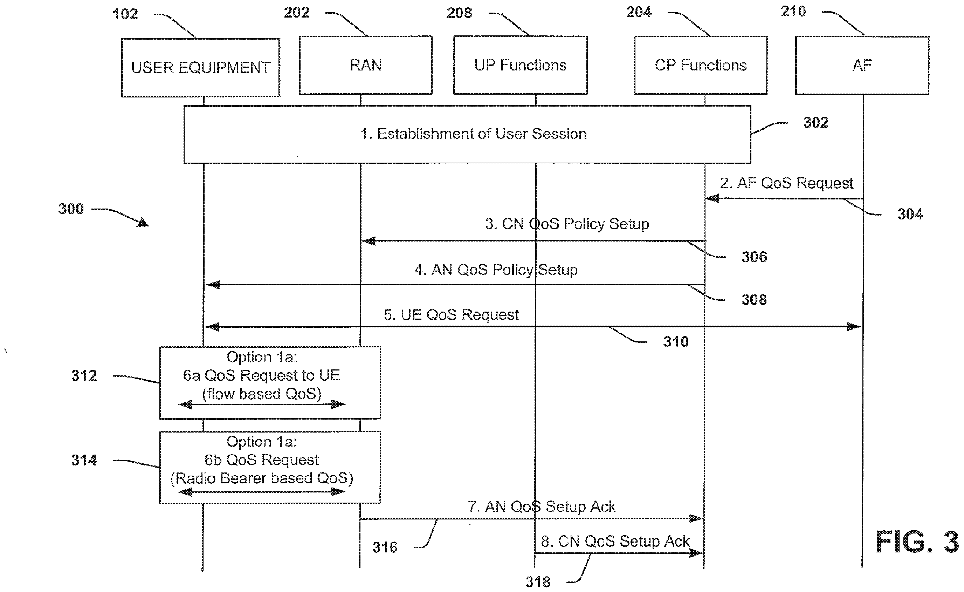

Referring to **FIG. 3****,** illustrated is a data scheme or process flow 300 for QoS signaling in accordance with various aspects or embodiments herein. The process flow can initiate at 302 with a user session (e.g., a packet data unit (PDU) session) that is established with the UE 101 and eNB of the NextGen network. At 304, the Application Function (AF) can be an element or component 210 offering packet flow that desires or requests a specific QoS treatment. The AF 210 communicates via NG5 an AF QoS request (e.g., with packet filters, flow bitrate, or the like) to the CP functions component 204. The AF component 210 can provide a QoS request to the CP functions component 204 with data related to packet filters that allows the system to identify the traffic, both in UL and DL, plus the associated QoS information or parameter data / values (e.g., FPI or other). This can be provided as an FPI parameter, but can comprise other parameters as well.

At 306, the CP functions component 204 establishes a QoS policy in the UP functions component 208 based on operator or UE requirements. The QoS policy includes the list of QoS parameters applicable to control QoS in relevant NextGen entities (core network (CN) 218, access node (AN) / RAN 202, or UE 102) as described above. The CP functions 204 sends a CN QoS Policy Setup (e.g., a DL Flow Descriptor, a Flow Priority Indicator, a DL Max Flow Bitrate, a DL Session Bitrate, or the like) via the NG4 interface. The DL Flow Descriptor can be used by the UP functions 208 to identify user plane packets on which to perform packet classification and marking with the FPI received within the QoS policy. In addition, the UP functions 208 can use DL Max Flow Bitrate and DL Session Bitrate to apply maximum bitrate control for downlink packets at the flow and session level. The FPI can refer to parameters which are preconfigured at the RAN node 202 or eNB and which describe the packet treatment.

At 308, the CP functions 204 communicates via the NG2 reference node or interface there-between a QoS Setup (e.g., a UL Flow Descriptor, a Flow Priority Indicator, an FPL, a UL Max Flow Bitrate, a UL and DL GFB, a UL Session Bitrate) message. The UL Flow Descriptor can be used by the RAN 202 to identify user plane packets on which to perform packet classification and marking in the uplink with the Flow Priority Indicator received within the QoS policy. The RAN 202 or eNB uses UL Max Flow Bitrate and UL Session Bitrate to enforce maximum bitrate control at session and flow levels for uplink user plane data packets based on received values. For non-GBR traffic the main QoS information (e.g., the FPI) can be received in-band in the User plane on a per packet basis, and thus, 308 is not as important for QoS handling of downlink traffic, and could be used for policing purposes for UL traffic to monitor or observe any UE operating outside of the pre-authorized policies.

At 310, the CP functions component 204 communicates or sends (via the NG1 reference node or interface there-between) a QoS Control Policy (UL Flow Descriptor, Flow Priority Indicator, UL GFB or the like) message to the UE 102. This comprises the NAS signaling, in which the CP functions 204 provide information to the UE 102 and primarily includes the UL QoS information to indicate to the UE 102 how to map UL packets, or tag them accordingly with the FPI information.

Different embodiments can be utilized for the QoS framework at the radio level. For example, at 312 the RAN 202 and UE 102 can manage QoS information on a per flow basis as performed in the core network 218. At 314, a radio bearer concept (from LTE-Uu interface) can be utilized, where the RAN (e.g., or eNB) 202 can perform mapping between flow marking performed in the CN 218 and the radio bearer on the radio. These acts 312 and 314 can be controlled as access stratum information by an AS layer within the access network and the UE 102, for example.

At 316, the RAN 202 can acknowledge a QoS enforcement operation to the CP functions by sending (via NG2) a QoS Setup Ack. At 318, the UP functions component acknowledges the QoS enforcement operation to the CP functions component 204 by sending (via NG4) CN QoS Setup Ack.

In particular, for DL-only traffic, the flow-based QoS proposal described above in acts 310 and 312 can provide a significant advantage compared to the LTE bearer model because the signaling of QoS information to the UE can be avoided. As such, an objective to minimise the explicit QoS signalling over the radio can be achieved.

In one embodiment, the UE 102 can be pre-authorized by the eNB or RAN 202 to use a set of FPI parameters such as over a range or with particular FPI values or other parameter values. Similar to QCI values, there can be various possible levels or values associated with the FPI. For each QCI value however, as with the network 100, for example, the network can form / establish a dedicated EPS bearer, which is each associated with the QCI that it can handle. Anytime there is a new or different packet flow it is to be added to one of the already established bearers and a signaling is performed to the UE 102 in order to give the packet filters (or TFTs) for UL packet to the UE 102. Otherwise the UE will not know how to map the UL packets or perform the bearer binding of the UL packets onto the EPS bearer. However, with the packet based flow, the UE 102 can operate a different FPI without explicit signaling at different levels or modification because the FPI is part of or defined by the pre-authorized QoS rules. As such, a separate bearer is not associated with each FPI level, but rather the pre-authorized QoS rules and related parameters operate for packet flows that alter within pre-authorized FPIs.

For traffic initiated by the UE 102 in a bearer based model of signaling, the UE 102 could not just start sending packets with the QCI for which there is not an already established EPS bearer. Here, if the UE 102 sees a need for a new QoS level, either for an application or other resource, the UE 102 makes the request using control plane signaling to the network or eNB 202, and then the network will trigger this network initiated procedure for distribution of the new QCI and packet filters, etc. In an aspect herein, a set of pre-authorized FPls can be communicated to the UE 102 when connected to the network in order to enable the UE 102 to immediately start using any of these pre-authorized FPls without having to use explicit control plane signaling over the network where the UE 102 communicates at each modification of the QoS or QoS parameter (e.g., the FPI parameter).

An advantage of this embodiment is that the UE 102 does not have to make QoS requests on per-packet basis and can modify its signaling immediately without having to make explicit QoS requests to the network. The applications themselves at the UE 102 can thus decide on the QoS required for their data packets and immediately implement the QoS on the packet flow or traffic flow. With a UE 102 pre-authorized to use a set of FPIs, the Uu interface, or other interface between the UE 102 and the network, can be configured so that anytime the UE 102 desires to send data with QoS levels for which there is no established bearer it can just start doing so on the condition that it maps all the packets it sends in the uplink with the FPI. This FPI has to be preauthorized, if it is not, it would have to go the latency way by using control plane signaling.

In another embodiment, implicitly initiated radio bearers (RBs) can be utilized on the radio interface. RBs can thus be established without using explicit RRC signalling (e.g. without using the RRC Reconfiguration Request procedure in LTE-Uu). A radio bearer (or RB) can be a section of the EPS bearer for communication between the UE and NG6 reference point, or the equivalent in 4G. The segment of the EPS bearer across the radio interface (just this segment) is considered the radio bearer, in which networks (e.g., 4G networks) prior to NextGen networks at least have a one to one mapping between the radio bearer and the EPS bearer, which we can still keep, but beyond the radio there is no bearer anymore only flows and packets. On the radio interface, we assume there needs to be established a radio bearer to support a specific QoS level. This radio bearer today in 4G requires control plane (CP) signaling that is known as Radio Resource Control (RRC) signaling. The procedure that is used in LTE-Uu interface is called the RRC configuration request. Thus, the network performs this CP signaling to establish a new radio bearer. However, for pre-authorized FPIs, the UE 102 could be able to implicitly initiate a radio bearer without going through explicit RRC signaling. The UE 102 will start sending data with new radio bearer ID tag that was not used by this UE 102 prior without additional or prior signaling. This can be an indication to the RAN 202 or eNB that the UE 102 is requesting a new bearer.

In one example, this tag or radio bearer ID can be the FPI or the FPI modification itself, or an explicit tag indication in an encapsulation header at session establishment while the UE 102 immediately begins utilizing the new or modified FPI. In another example, the pre-authorised set of FPls enable the UE to implicitly initiate a new radio bearer at any time. The UE 102 can initiate a new RB if it wants to send data with a different FPI than what is provided by the existing RBs. The UE 102 can then include the applied FPI in the PDCP (or RLC or MAC) header of the uplink data unit. This information can then be used by the RAN 202 to replicate it onto the NG3 reference point toward the core network 218, so it also knows which QoS is requested for specific packets.

In another embodiment, the UE 102 can send information with the FPI that includes an indication of whether a reflective QoS is desirable. The reflective QoS indication can indicate whether the UE 102 desires for the corresponding DL flow to be handled with the same QoS as the UE 102 has used. Reflective QoS means that if the network sends some DL packets to the UE 102 and the UE 102 has not first explicitly been signaled a packet filter to know what to do, the UE 102 will create implicitly packet filters by taking the DL packet header and creating a mirror packet header. For example, an IP header (e.g., an IP5 topple) can include a source ACK address and a destination ACK address, a source port number and a destination port number, and thus to create a mirror packet header and mirror the QoS in a different flow direction (e.g., UL or DL) a swap can be made of the source with the destination for both IP addresses and the port number to create a packet filter for a corresponding UL traffic. As such, an indication can be used both in UL and DL in the User plane where a reflective QoS is desirable or not. This means again we are assuming there will be one bit of info either in a PDCP (or RLC or MAC) header that tells the UE 102 to apply the same QoS for corresponding traffic in the UL, for example.

In another embodiment, the RAN 102 or eNB can implicitly initiate a RB at any time, even for FPls that were not pre-authorised in the UE 102. The RAN 102 can initiate a new RB if it wants to send data with a different FPI than what is provided by the existing RBs. The RAN 202 can include the applied FPI in the PDCP (or RLC or MAC) header of the downlink data unit. It also includes an indication whether "reflective QoS" is required, or in other words, whether the UE 102 should apply the same QoS for the corresponding UL flow.

In a further embodiment, the implicit RB initiation can be performed by the eNB or RAN 202 by using a new (currently unused) Radio Bearer ID (RB ID) in the PDCP (or RLC or MAC) header of the uplink/downlink data unit. The implicitly initiated RB can be terminated based on a timer (e.g., no traffic based on the particular bearer can consider it terminated), or based on an explicit "release indication" in the PDCP (or RLC or MAC) header, for example.

In another embodiment, the Buffer Status Reporting (BSR) can be performed by the UE on per-FPI basis, in which a BSR message indicates the number of buffered uplink packets on per-FPI basis. If there is a need for reducing the number of bits in the BSR message, the BSR can also be performed on the basis of FPI groups such as by an FPI group ID or the like that designates packets in different queues or that are grouped in a way that corresponds to particular FPls or FPI groupings. The BSR can be directly on the basis of the FPI. Too many FPls could complicate or make the messages too big, then FPI groups can be enabled. The FPI groups could standardized, predetermined or preconfigured by the network instead of being explicitly signalled, for example, which map particular buffers or queues to particular FPIs or FPI group IDs associated with particular FPI values or levels.

Additionally or alternatively, explicit signalling of QoS information (i.e. Flow Descriptor and associated QoS parameters) can still be utilized, but performed only as needed, such as when a GBR traffic is requested or utilized. The explicit signalling can be performed using an AS layer or procedure only (e.g., via RRC Reconfiguration Request), or it can be sent partly as NAS content and partly as AS content. The linkage between the explicitly signalled QoS information and the associated radio bearer is performed either with an RB ID signalled as Access Stratum (e.g. RRC) parameter or could be based on the FPI (signalled as an NAS parameter, but also used in the PDCP/RLC/MAC header of the data units), for example.

The embodiments discussed above can be applied to the LTE-Uu interface, by making the same changes in the PDCP (or RLC or MAC) header, in the RRC Reconfiguration Request message or in the NAS message content.

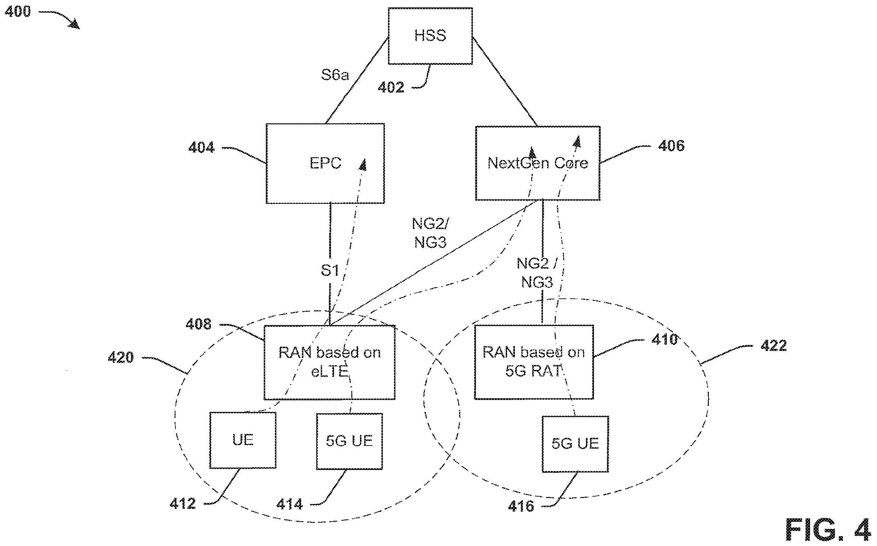

Referring now to **FIG. 4****,** illustrated is an example network configured to enable the operation of legacy network devices and NextGen network devices (e.g., UEs) in the same network based on a set of pre-authorized QoS rules in accordance with aspects and embodiments described herein. The network system 400 is an example of an interworking architecture for possible interworking between legacy network (e.g., the EPC 404 in the LTE on the left hand side) and the NextGen core 406 with the 5G radio (e.g., the RAN 410 based on 5G RAT on the right hand side), in which each or both can be a component of an eNB or separate eNBs as RANs 408 and 410, which can be configured to connect to or comprise both the evolved packet core 404 and the NextGen core 406. Thus the UE signaling treatment or operation can be based on whether the UE is 5G capable or not to determine if the communication flow would be steered either to the EPC core 404 or the NextGen core 406. For example, UE 412 can be a legacy UE with bearer based operation handling, while a UEs 414 or 416 can be 5G UEs operable for flow based on pre-authorized QoS rules for non-GBR traffic and other related embodiments described herein.

On the left side, a legacy UE 412 and the 5G UE 414 can connect to the LTE eNB with RAN based on LTE 408, and the legacy UE 412 has traffic handled over the S1 interface to the EPC 404 while the 5G UE 414 can have communications directed to the NextGen core 406 over the NG2 / NG3 interface(s). Thus, the QoS handling can be different for different UEs so that flow based handling for QoS can be enabled for the 5G UE 414 with pre-authorization of QoS rules and QoS handling for the UE 412 can be bearer based.

In order to support the QoS flow based handling for the 5G UE 414, the PDCP/ RLC / MAC protocol in LTE can include the information that configures the PDCP layer (or RLC or MAC) to carry the FPI marking and the "reflective QoS" indication. Further, the RRC Reconfiguration Request Message can carry the flow-level QoS parameters as AS-level information entirely, or partially as part NAS-level layer operations and part AS-level. Additionally, the BSR can be performed on a per-FPI (or FPI group) basis, and the UE and eNB are able to implicitly initiate new RBs from existing ones corresponding to another QoS level or set of QoS values. Based on the UE capability, the eNB can know whether to apply the new or the legacy PDCP/RLC/MAC protocol stack, as well as the appropriate operation protocols for directing the communications and utilizing different flow based (bearerless) protocols or entirely bearer based protocols.

The components of the RAN based on LTE 408 can be employed in or as an eNB 408 configured to generate and manage cell coverage area / zone 420, while another eNB 410 controls the 5G based cell area 422. Although depicted as multiple coverage areas, this is only one example architecture and is not confined to any one or more cell coverage areas as illustrated on the right and left of the system 400.

One embodiment relates to QoS pre-authorization in the UE 414 or 416, for example. Upon establishment of a PDU Session, the UE 414, 416 can receive from the network a set of pre-authorized QoS markings comprising a set of FPIs. The meaning of the FPI can be defined in TR 23.799 clause 6.2.2 and be similar in operation to the QCI in EPS. The set of authorized FPls for the UE 414, 416 can be stored in the home subscriber storage (HSS) 402, possibly on a per Access Point Name (APN) basis so that nodes or eNBs can pre-authorize different FPls according to network deployment scenarios.

Additionally or alternatively, other mechanisms to pre-authorize UE QoS such as operator configuration of subscribe identification module (SIM) parameters stored in a storage, either externally or internally. For example, the pre-authorization can be signaled in real time or be stored in a SIM memory. Additionally or alternatively, these parameter values can be maintained and stored in the HSS as well. This signaling can be performed when the packet data network (PDU) connection is established, or in NextGen systems the PDU session establishment.

In roaming scenarios where a UE 414 or 416 is roaming without connection to a network 420 or 422, the set of pre-authorized FPls can be modified by the CP functions component 204 in the visited PLMN. In roaming, certain FPls that the UE 414 or 416 can use in the home network are not reported for whatever policy reads on the visited Network, the FPls can be modify and then signaled to the UE 414 or 416.

As stated above, the set of pre-authorized FPls can be used by applications running in the UE 414 or 416 for transmission of uplink packets without having to make explicit QoS requests to the network. The application, for example, can provide a QoS marking to the "lower layers" in the UE 414 or 416 along with every uplink packet. The QoS marking provided by the application can then be internally mapped in the UE 414 or 416 into one of the pre-authorized FPls and transmitted in the uplink according to the QoS treatment (QoS level or value(s), and related / associated parameters to such level) associated with this FPI.

A mapping between the QoS marking provided by the application of the UE 414, 416 and the FPI can be based on a long term configuration in the UE and as such not need to be signaled each time the UE 414, 416 connects to a new PLMN or eNB of a different network. These different markings or QoS levels can correspond to different types of applications utilizing different data such as for emergency public services, voice, video, or the like. For example, the mission critical communications can have one FPI that is used for basic walkie-talkie chat, or device-to-device communications. For emergency situation there would be another FPI and even for imminent failure another FPI. All these three FPls or QoS levels (D2D, emergency call, imminent peril) for the same application could be pre-authorized for a specific application, and the mapping of how the application can use the FPI is from a long term configuration in the UE 414, 416 so signaling of the configurations or mapping is not essential at every connection session with the network. This is can be how to handle specific traffic when the packet or transmission is sent to the lower layer (MAC layer or a modem). Some levels could be dynamically signaled as well. The network or eNB 408 or 410 could further verify that the UE 414, 416 is not violating its authorized FPIs. This could be done by the RAN or the Core Network user plane functions component 206 acting as a P-GW upon receipt of the data packet.

In other embodiment, implicit signaling of QoS information related to pre-authorized QoS rules to enable different QoS levels to be utilized freely by a UE 414 or 416 can be facilitated by the eNB (e.g., 408 or 410) and UEs at the UL or DL. Instead of signaling a change, a network device (e.g., UE or eNB) can immediately start using a new number or QoS level / value, which would automatically be considered a request for a new bearer by a detection of such use or modification. Further, a Radio Bearer ID could be implemented to indicate such change, which could be the FPI change itself or designated within an encapsulation header at a PDU session establishment for example. All traffic that requests / demands the same QoS handling can be put on the same FPI, and in this case the Radio Bearer ID can be the FPI itself. If the radio bearer ID is not the FPI or FPI marking (e.g., FPI value or level corresponding to a particular type of data such as GBR, non-GBR, voice, video, gaming, emergency, etc.) itself, then the FPI or FPI marking can be provided within the PDCP (or RLC or MAC) header, which can be used for different functions.

In one function, the header with the Radio Bearer ID can indicate to the RAN 408 or 410 what the QoS is for a particular packet or traffic flow so that the RAN 408 / 410 can then replicate the FPI marking or parameter value to the NG3 interface towards the core network 406 and beyond, which further operates to verify whether the UE has been using the FPI correctly or within the parameters of the pre-authorized QoS rules. In another function, the Radio Bearer ID allows the UP functions 206 in the core network 218 (in particular the UP function connecting to the Data Network over NG6) to verify whether the UE414 or 416 has been using the FPI marking according to the pre-authorised policies. This can also enable the UP functions component 206 to determine the FPI to be applied in the downlink direction for corresponding packet flows. In another function, the Radio Bearer ID can enable the RAN 408 / 410 to perform the same verification function, so policing function can be by the RAN or the core network as far as UL packets are concerned and it is based on the FPI, which is associated with the packets.

Additionally or alternatively, a reflective QoS indication can be used in both DL and UL directions. When used in the DL direction this should be understood as a command in the sense that the UE 414, 416 shall create implicit packet filters to reflect the QoS or FPI level of the DL, such as by swapping source and destination address, for example. In the DL direction the indication can be understood as a command, and in the UL direction it is that the UE has set the bit for a reflective QoS so that it is desirable behavior (as an implicit request) while utilizing its selected QoS within the pre-authorized QoS parameters or FPIs. The network however is in a position to have a better idea of what to do or how to manage the network communications, and thus, in the UL the UE 414, 416 can provide a request indication / reflective QoS indication that the network applies the same, and in the DL the eNB can provide the reflective QoS indication as a command.

The UE 414, 416 can also include an indication of whether "reflective QoS" is desirable; whether the UE 414, 416 wishes for the corresponding DL flow to be handled with the same QoS. This indication can be carried in the PDCP (or RLC or MAC) header over the radio interface and can also be replicated by the RAN in the NG3 encapsulation header.

The RAN 408 or 410 can implicitly initiate a RB at any time, even for FPls that were not configured in the UE 414 or 416 as pre-authorised for this UE 414, 416. The mechanism for implicit initiation and termination of a RB is the same as described for the UE 414, 416. The RAN 408 or 410 can include the FPI marking (determined locally or received from the NG3 encapsulation header) in the PDCP (or RLC or MAC) header of the downlink data unit session or establishment. The included FPI marking can be used by the UE 414, 416 in case it is acting as a UE-to-Network Relay for determining the QoS to be applied on the UE-to-UE interface for other UEs as well or therebetween the UE 414 and 416, for example.

The RAN 408 or 410 can also include an indication whether "reflective QoS" is required, indicating whether the UE should apply the same QoS for the corresponding UL flow. This indication (determined locally or received from the NG3 encapsulation header) is carried in the PDCP (or RLC or MAC) header over the radio interface.

In another aspect, as discussed above, buffer status reporting or BSR can be conducted based on a per FPI basis while avoiding any explicit QoS signaling. The BSR can be performed by the UE 414 or 416 on a per-FPI basis, in which the BSR message indicates the number of buffered uplink packets on a per-FPI basis or for each FPI value as pre-authorized as a pre-authorized QoS rule. If there is a need for reducing the number of bits in the BSR message, the BSR can also be performed on the basis of FPI groups. As such there is no explicit signaling to tell the UE 414 or 416 how to map logical channel IDs, FPI IDs or FPI group IDs into logical channel groups because this can be performed on a per FPI basis or predetermined FPI groups basis.

While the 5G UEs 414 or 416 are handled by a process flow or packet flow signaling via pre-authorized QoS rules so that all of the data is handled completely as AS data for flow-level QoS parameters (e.g., FPI, FPL, GFB, MFB or the like), the UE 412 can operate according to a bearer based signaling with information signaled as part NAS and part AS data. For bearer based signaling in the EPS, NAS information is signaled for the QCI, as well as any Guaranteed bit rate and the packet filters (TFTs). The NAS container comprises the EPS bearer ID, the TFT and some QoS parameters (e.g., GBR and MBR). AS information is signaled as the radio access network level QoS parameters, which are called prioritized bit rate (PBR) and radio bearer priority (RBP). However, the packet filters that today are provided as NAS, can be provided as AS information. AS information comprises a radio bearer ID, a logical channel ID, an EPS bearer ID, and RAN level QoS parameters (PBR and RBP).

In an embodiment, the explicitly signaled QoS related information can be conveyed as AS information only, or remained as in 4G with part AS and part NAS, for example. In the former case, the flow QoS parameters (such as FPI, FPL, GFB and MFB) can be signalled only as Access Stratum parameters, along with the RB ID of the associated radio bearer that will be used for this flow. In the latter case the Flow Descriptor and the associated per-flow QoS information (FPI, GFB, MFB, ARP) are signalled as NAS information, in which case the linkage between the NAS-level QoS information and the associated radio bearer is performed based on the FPI carried in the PDCP/RLC/MAC header.

The embodiments herein can be applied to the LTE-Uu interface, by making the same changes in the PDCP, RLC or MAC header, in the RRC Reconfiguration Request message, or in the NAS message content

While the methods described within this disclosure are illustrated in and described herein as a series of acts or events, it will be appreciated that the illustrated ordering of such acts or events are not to be interpreted in a limiting sense. For example, some acts may occur in different orders and/or concurrently with other acts or events apart from those illustrated and/or described herein. In addition, not all illustrated acts may be required to implement one or more aspects or embodiments of the description herein. Further, one or more of the acts depicted herein may be carried out in one or more separate acts and/or phases.

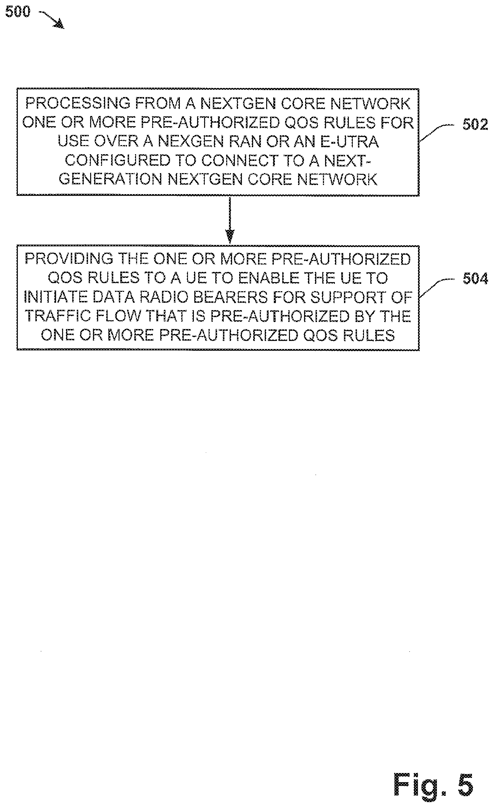

Referring to **FIG. 5****,** illustrated is an example method 500 for enabling a packet flow over a NextGen RAN and minimizing explicit QoS signaling. At 502, the method includes processing from a NextGen core network one or more pre-authorized QoS rules for use over a NexGen RAN or an E-UTRA configured to connect to a Next-Generation NextGen core network. At 504, the method includes providing the one or more pre-authorized QoS rules to a user equipment ("UE") to enable the UE to initiate data radio bearers for support of traffic flow that is pre-authorized by the one or more pre-authorized QoS rules.

The method 500 can further comprise generating a reflective QoS via the RAN by reflecting the QoS to a DL traffic flow that corresponds to an UL traffic flow, or triggering a reflection of the QoS of the DL traffic flow in the UL traffic flow by providing an indication of the reflection of the QoS of the DL traffic flow within a packet data convergence protocol PDCP header, a radio link control RLC header, or a MAC header.

The method 500 can further include initiating or terminating radio bearers for support of a service data flow that is initiated or terminated outside of a PDU session establishment and corresponds to a non-guaranteed bit rate without control plane signaling with the NextGen core network. In another aspect, the set of QoS parameters associated with a GBR traffic flow or a non-GBR related traffic flow can be generated and provided to a UE by including a flow descriptor, an associated per-flow QoS information and a radio bearer identifier within a radio resource control RRC signaling entirely as access stratum-level information.

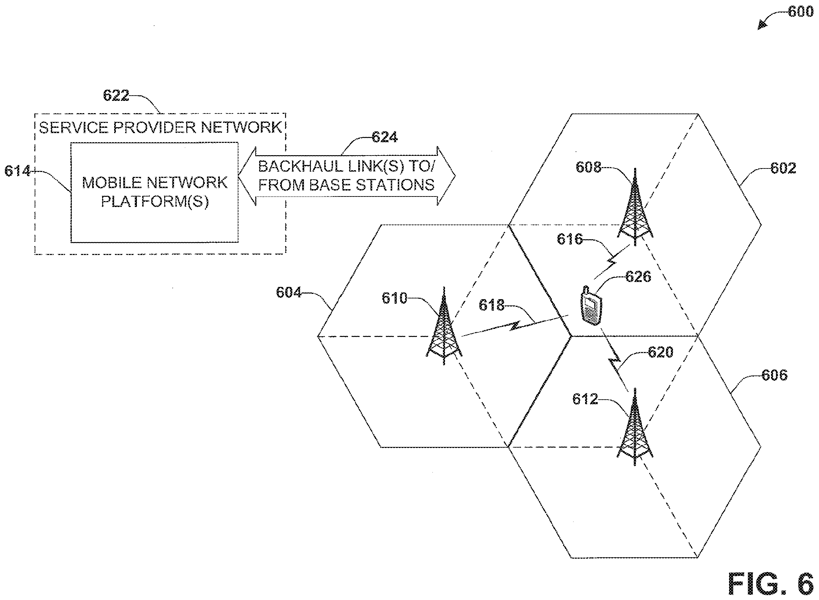

By way of further description with respect to one or more non-limiting environments that facilitate QoS signaling operations according to the aspects and embodiments being described herein, **FIG. 6** is a schematic example wireless environment 600. In particular, the example wireless environment 600 illustrates a set of wireless network macro cells. Three coverage macro cells 602, 604, and 606 include the illustrative wireless environment; however, it is noted that wireless cellular network deployments can encompass any number of macro cells. Coverage macro cells 602, 604, and 606 are illustrated as hexagons; however, coverage cells can adopt other geometries generally dictated by a deployment configuration or floor plan, geographic areas to be covered, and so on. Each macro cell 602, 604, and 606 is sectorized in a 2π/3 configuration in which each macro cell includes three sectors, demarcated with dashed lines in **FIG. 6****.** It is noted that other sectorizations are possible, and aspects or features of the disclosed subject matter can be exploited regardless of type of sectorization. Macro cells 602, 604, and 606 are served respectively through base stations or eNodeBs 608, 610, and 612. Any two eNodeBs can be considered an eNodeB site pair. It is noted that radio component(s) are functionally coupled through links such as cables (e.g., RF and microwave coaxial lines), ports, switches, connectors, and the like, to a set of one or more antennas that transmit and receive wireless signals (not illustrated). It is noted that a radio network controller (not shown), which can be a part of mobile network platform(s) 614, and set of base stations (e.g., eNode B 608, 610, and 612) that serve a set of macro cells; electronic circuitry or components associated with the base stations in the set of base stations; a set of respective wireless links (e.g., links 616, 618, and 620) operated in accordance with a radio technology through the base stations, form a macro radio access network. It is further noted that, based on network features, the radio controller can be distributed among the set of base stations or associated radio equipment. In an aspect, for universal mobile telecommunication system-based networks, wireless links 616, 618, and 620 embody a Uu interface (universal mobile telecommunication system Air Interface).

Mobile network platform(s) 614 facilitates circuit switched-based (e.g., voice and data) and packet-switched (e.g., Internet protocol, frame relay, or asynchronous transfer mode) traffic and signaling generation, as well as delivery and reception for networked telecommunication, in accordance with various radio technologies for disparate markets. Telecommunication is based at least in part on standardized protocols for communication determined by a radio technology utilized for communication. In addition, telecommunication can exploit various frequency bands, or carriers, which include any electromagnetic frequency bands licensed by the service provider network 622 (e.g., personal communication services, advanced wireless services, general wireless communications service, and so forth), and any unlicensed frequency bands currently available for telecommunication. In addition, mobile network platform(s) 614 can control and manage base stations 608, 610, and 612 and radio component(s) associated thereof, in disparate macro cells 602, 604, and 606 by way of, for example, a wireless network management component (e.g., radio network controller(s), cellular gateway node(s), etc.). Moreover, wireless network platform(s) can integrate disparate networks (e.g., Wi-Fi network(s), femto cell network(s), broadband network(s), service network(s), enterprise network(s), and so on). In cellular wireless technologies (e.g., third generation partnership project universal mobile telecommunication system, global system for mobile communication, etc.), mobile network platform 614 can be embodied in the service provider network 622.

In addition, wireless backhaul link(s) 624 can include wired link components such as a T1/E1 phone line, a T3/DS3 line, a digital subscriber line either synchronous or asynchronous; an asymmetric digital subscriber line; an optical fiber backbone; a coaxial cable, etc.; and wireless link components such as line-of-sight or non-line-of-sight links which can include terrestrial air-interfaces or deep space links (e.g., satellite communication links for navigation). In an aspect, for universal mobile telecommunication system-based networks, wireless backhaul link(s) 624 embodies an luB interface.

It is noted that while an exemplary wireless environment 600 is illustrated for macro cells and macro base stations, aspects, features and advantages of the disclosed subject matter can be implemented in micro cells, pico cells, femto cells, or the like, wherein base stations are embodied in home-based equipment related to access to a network.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

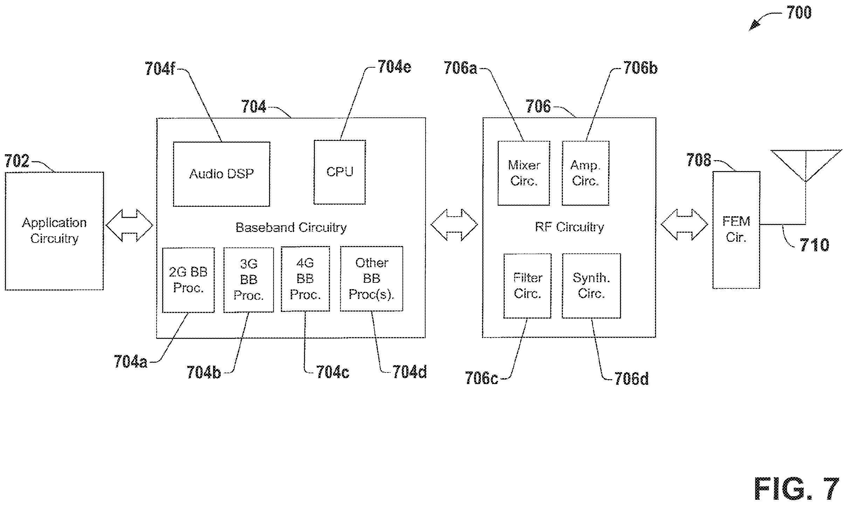

Embodiments described herein may be implemented into a system using any suitably configured hardware and/or software. Figure 7 illustrates, for one embodiment, example components of an electronic device 700. In embodiments, the electronic device 700 may be, implement, be incorporated into, or otherwise be a part of a user equipment (UE), an evolved NodeB (eNB), a server implemented as a core network element, or some other suitable electronic device. In some embodiments, the electronic device 700 may include application circuitry 702, baseband circuitry 704, Radio Frequency (RF) circuitry 706, front-end module (FEM) circuitry 708 and one or more antennas 710, coupled together at least as shown.

The application circuitry 702 may include one or more application processors. For example, the application circuitry 702 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 704 may include circuitry such as, but not limited to, one or more single-core or multi-core processors. The baseband circuitry 704 may include one or more baseband processors and/or control logic to process baseband signals received from a receive signal path of the RF circuitry 706 and to generate baseband signals for a transmit signal path of the RF circuitry 706. Baseband processing circuity 704 may interface with the application circuitry 702 for generation and processing of the baseband signals and for controlling operations of the RF circuitry 706. For example, in some embodiments, the baseband circuitry 704 may include a second generation (2G) baseband processor 704a, third generation (3G) baseband processor 704b, fourth generation (4G) baseband processor 704c, and/or other baseband processor(s) 704d for other existing generations, generations in development or to be developed in the future (e.g., fifth generation (5G), 6G, etc.). The baseband circuitry 704 (e.g., one or more of baseband processors 704a-d) may handle various radio control functions that enable communication with one or more radio networks via the RF circuitry 706. The radio control functions may include, but are not limited to, signal modulation/demodulation, encoding/decoding, radio frequency shifting, etc. In some embodiments, modulation/demodulation circuitry of the baseband circuitry 704 may include Fast-Fourier Transform (FFT), precoding, and/or constellation mapping/demapping functionality. In some embodiments, encoding/decoding circuitry of the baseband circuitry 704 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 704 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 704e of the baseband circuitry 704 may be configured to run elements of the protocol stack for signaling of the PHY, MAC, RLC, PDCP and/or RRC layers. In some embodiments, the baseband circuitry may include one or more audio digital signal processor(s) (DSP) 704f. The audio DSP(s) 704f may be include elements for compression/decompression and echo cancellation and may include other suitable processing elements in other embodiments.

The baseband circuitry 704 may further include memory/storage 704g. The memory/storage 704g may be used to load and store data and/or instructions for operations performed by the processors of the baseband circuitry 704. Memory/storage for one embodiment may include any combination of suitable volatile memory and/or non-volatile memory. The memory/storage 704g may include any combination of various levels of memory/storage including, but not limited to, read-only memory (ROM) having embedded software instructions (e.g., firmware), random access memory (e.g., dynamic random access memory (DRAM)), cache, buffers, etc. The memory/storage 704g may be shared among the various processors or dedicated to particular processors.

Components of the baseband circuitry may be suitably combined in a single chip, a single chipset, or disposed on a same circuit board in some embodiments. In some embodiments, some or all of the constituent components of the baseband circuitry 704 and the application circuitry 702 may be implemented together such as, for example, on a system on a chip (SOC).

In some embodiments, the baseband circuitry 704 may provide for communication compatible with one or more radio technologies. For example, in some embodiments, the baseband circuitry 704 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 704 is configured to support radio communications of more than one wireless protocol may be referred to as multi-mode baseband circuitry.

RF circuitry 706 may enable communication with wireless networks using modulated electromagnetic radiation through a non-solid medium. In various embodiments, the RF circuitry 706 may include switches, filters, amplifiers, etc. to facilitate the communication with the wireless network. RF circuitry 706 may include a receive signal path which may include circuitry to down-convert RF signals received from the FEM circuitry 708 and provide baseband signals to the baseband circuitry 704. RF circuitry 706 may also include a transmit signal path which may include circuitry to up-convert baseband signals provided by the baseband circuitry 704 and provide RF output signals to the FEM circuitry 708 for transmission.

In some embodiments, the RF circuitry 706 may include a receive signal path and a transmit signal path. The receive signal path of the RF circuitry 706 may include mixer circuitry 706a, amplifier circuitry 706b and filter circuitry 706c. The transmit signal path of the RF circuitry 706 may include filter circuitry 706c and mixer circuitry 706a. RF circuitry 706 may also include synthesizer circuitry 706d for synthesizing a frequency for use by the mixer circuitry 706a of the receive signal path and the transmit signal path. In some embodiments, the mixer circuitry 706a of the receive signal path may be configured to down-convert RF signals received from the FEM circuitry 708 based on the synthesized frequency provided by synthesizer circuitry 706d. The amplifier circuitry 706b may be configured to amplify the down-converted signals and the filter circuitry 706c may be a low-pass filter (LPF) or band-pass filter (BPF) configured to remove unwanted signals from the down-converted signals to generate output baseband signals. Output baseband signals may be provided to the baseband circuitry 704 for further processing. In some embodiments, the output baseband signals may be zero-frequency baseband signals, although this is not a requirement. In some embodiments, mixer circuitry 706a of the receive signal path may comprise passive mixers, although the scope of the embodiments is not limited in this respect.

In some embodiments, the mixer circuitry 706a of the transmit signal path may be configured to up-convert input baseband signals based on the synthesized frequency provided by the synthesizer circuitry 706d to generate RF output signals for the FEM circuitry 708. The baseband signals may be provided by the baseband circuitry 704 and may be filtered by filter circuitry 706c. The filter circuitry 706c may include a low-pass filter (LPF), although the scope of the embodiments is not limited in this respect.

In some embodiments, the mixer circuitry 706a of the receive signal path and the mixer circuitry 706a of the transmit signal path may include two or more mixers and may be arranged for quadrature downconversion and/or upconversion respectively. In some embodiments, the mixer circuitry 706a of the receive signal path and the mixer circuitry 706a of the transmit signal path may include two or more mixers and may be arranged for image rejection (e.g., Hartley image rejection). In some embodiments, the mixer circuitry 706a of the receive signal path and the mixer circuitry 706a may be arranged for direct downconversion and/or direct upconversion, respectively. In some embodiments, the mixer circuitry 706a of the receive signal path and the mixer circuitry 706a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 706 may include analog-to-digital converter (ADC) and digital-to-analog converter (DAC) circuitry and the baseband circuitry 704 may include a digital baseband interface to communicate with the RF circuitry 706.

In some dual-mode embodiments, a separate radio IC circuitry may be provided for processing signals for each spectrum, although the scope of the embodiments is not limited in this respect.

In some embodiments, the synthesizer circuitry 706d may be a fractional-N synthesizer or a fractional N/N+7 synthesizer, although the scope of the embodiments is not limited in this respect as other types of frequency synthesizers may be suitable. For example, synthesizer circuitry 706d may be a delta-sigma synthesizer, a frequency multiplier, or a synthesizer comprising a phase-locked loop with a frequency divider.

The synthesizer circuitry 706d may be configured to synthesize an output frequency for use by the mixer circuitry 706a of the RF circuitry 706 based on a frequency input and a divider control input. In some embodiments, the synthesizer circuitry 706d may be a fractional N/N+7 synthesizer.

In some embodiments, frequency input may be provided by a voltage controlled oscillator (VCO), although that is not a requirement. Divider control input may be provided by either the baseband circuitry 704 or the applications processor 702 depending on the desired output frequency. In some embodiments, a divider control input (e.g., N) may be determined from a look-up table based on a channel indicated by the applications processor 702.

Synthesizer circuitry 706d of the RF circuitry 706 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+7 (e.g., based on a carry out) to provide a fractional division ratio. In some example embodiments, the DLL may include a set of cascaded, tunable, delay elements, a phase detector, a charge pump and a D-type flipflop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 706d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 706 may include an IQ/polar converter.

FEM circuitry 708 may include a receive signal path which may include circuitry configured to operate on RF signals received from one or more antennas 710, amplify the received signals and provide the amplified versions of the received signals to the RF circuitry 706 for further processing. FEM circuitry 708 may also include a transmit signal path which may include circuitry configured to amplify signals for transmission provided by the RF circuitry 706 for transmission by one or more of the one or more antennas 710.

In some embodiments, the FEM circuitry 708 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 706). The transmit signal path of the FEM circuitry 708 may include a power amplifier (PA) to amplify input RF signals (e.g., provided by RF circuitry 706), and one or more filters to generate RF signals for subsequent transmission (e.g., by one or more of the one or more antennas 710.

In some embodiments, the electronic device 700 may include additional elements such as, for example, memory/storage, display, camera, sensor, and/or input/output (I/O) interface. In embodiments where the electronic device 700 is implemented in an eNB or a server acting as a core network element, the electronic device may also include network interface circuitry configured to transmit and receive data over a wired connection in accordance with one or more wired communications protocols.

In some embodiments, the electronic device of Figure 7 may be configured to perform one or more processes, techniques, and/or methods as described herein, or portions thereof.

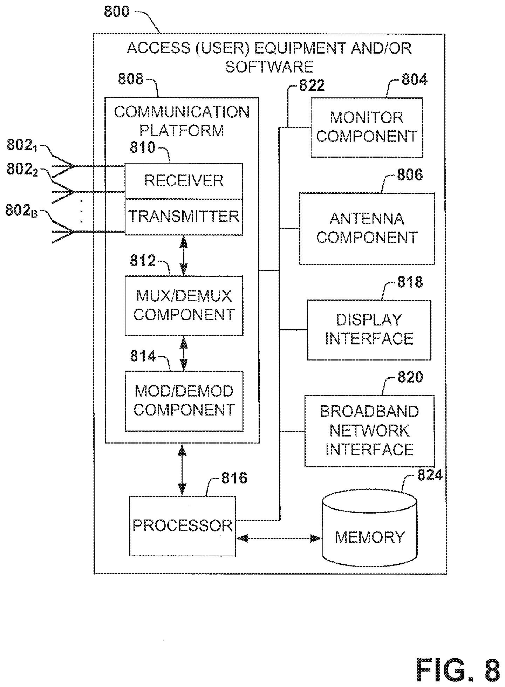

To provide further context for various aspects of the disclosed subject matter, **FIG.** 8 illustrates a block diagram of an embodiment of access equipment and/or software 800 related to access of a network (e.g., base station, wireless access point, femtocell access point, and so forth) that can enable and/or exploit features or aspects disclosed herein.

Access equipment, UE and/or software 800 related to access of a network can receive and transmit signal(s) from and to wireless devices, wireless ports, wireless routers, etc. through segments 802₈-802_{B} (B is a positive integer). Segments 802₈-802_{B} can be internal and/or external to access equipment and/or software 800 related to access of a network, and can be controlled by a monitor component 804 and an antenna component 806. Monitor component 804 and antenna component 806 can couple to communication platform 808, which can include electronic components and associated circuitry that provide for processing and manipulation of received signal(s) and other signal(s) to be transmitted.

In an aspect, communication platform 808 includes a receiver/transmitter 810 that can convert analog signals to digital signals upon reception of the analog signals, and can convert digital signals to analog signals upon transmission. In addition, receiver/transmitter 810 can divide a single data stream into multiple, parallel data streams, or perform the reciprocal operation. Coupled to receiver/transmitter 810 can be a multiplexer/demultiplexer 812 that can facilitate manipulation of signals in time and frequency space. Multiplexer/demultiplexer 812 can multiplex information (data/traffic and control/signaling) according to various multiplexing schemes such as time division multiplexing, frequency division multiplexing, orthogonal frequency division multiplexing, code division multiplexing, space division multiplexing. In addition, multiplexer/demultiplexer component 812 can scramble and spread information (e.g., codes, according to substantially any code known in the art, such as Hadamard-Walsh codes, Baker codes, Kasami codes, polyphase codes, and so forth).

A modulator/demodulator 814 is also a part of communication platform 808, and can modulate information according to multiple modulation techniques, such as frequency modulation, amplitude modulation (e.g., M-ary quadrature amplitude modulation, with M a positive integer); phase-shift keying; and so forth).

Access equipment and/or software 800 related to access of a network also includes a processor 816 configured to confer, at least in part, functionality to substantially any electronic component in access equipment and/or software 800. In particular, processor 816 can facilitate configuration of access equipment and/or software 800 through, for example, monitor component 804, antenna component 806, and one or more components therein. Additionally, access equipment and/or software 800 can include display interface 818, which can display functions that control functionality of access equipment and/or software 800, or reveal operation conditions thereof. In addition, display interface 818 can include a screen to convey information to an end user. In an aspect, display interface 818 can be a liquid crystal display, a plasma panel, a monolithic thin-film based electrochromic display, and so on. Moreover, display interface 818 can include a component (e.g., speaker) that facilitates communication of aural indicia, which can also be employed in connection with messages that convey operational instructions to an end user. Display interface 818 can also facilitate data entry (e.g., through a linked keypad or through touch gestures), which can cause access equipment and/or software 800 to receive external commands (e.g., restart operation).

Broadband network interface 820 facilitates connection of access equipment and/or software 800 to a service provider network (not shown) that can include one or more cellular technologies (e.g., third generation partnership project universal mobile telecommunication system, global system for mobile communication, and so on) through backhaul link(s) (not shown), which enable incoming and outgoing data flow. Broadband network interface 820 can be internal or external to access equipment and/or software 800, and can utilize display interface 818 for end-user interaction and status information delivery.

Processor 816 can be functionally connected to communication platform 808 and can facilitate operations on data (e.g., symbols, bits, or chips) for multiplexing/demultiplexing, such as effecting direct and inverse fast Fourier transforms, selection of modulation rates, selection of data packet formats, inter-packet times, and so on. Moreover, processor 816 can be functionally connected, through data, system, or an address bus 822, to display interface 818 and broadband network interface 820, to confer, at least in part, functionality to each of such components.

In access equipment and/or software 800, memory 824 can retain location and/or coverage area (e.g., macro sector, identifier(s)) access list(s) that authorize access to wireless coverage through access equipment and/or software 800, sector intelligence that can include ranking of coverage areas in the wireless environment of access equipment and/or software 800, radio link quality and strength associated therewith, or the like. Memory 824 also can store data structures, code instructions and program modules, system or device information, code sequences for scrambling, spreading and pilot transmission, access point configuration, and so on. Processor 816 can be coupled (e.g., through a memory bus), to memory 824 in order to store and retrieve information used to operate and/or confer functionality to the components, platform, and interface that reside within access equipment and/or software 800.

As it employed in the subject specification, the term "processor" can refer to substantially any computing processing unit or device including, but not limited to including, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit, a digital signal processor, a field programmable gate array, a programmable logic controller, a complex programmable logic device, a discrete gate or transistor logic, discrete hardware components, or any combination thereof designed to perform the functions and/or processes described herein. Processors can exploit nano-scale architectures such as, but not limited to, molecular and quantum-dot based transistors, switches and gates, in order to optimize space usage or enhance performance of mobile devices. A processor may also be implemented as a combination of computing processing units.

In the subject specification, terms such as "store," "data store," data storage," "database," and substantially any other information storage component relevant to operation and functionality of a component and/or process, refer to "memory components," or entities embodied in a "memory," or components including the memory. It is noted that the memory components described herein can be either volatile memory or nonvolatile memory, or can include both volatile and nonvolatile memory.

Byway of illustration, and not limitation, nonvolatile memory, for example, can be included in memory 824, non-volatile memory (see below), disk storage (see below), and memory storage (see below). Further, nonvolatile memory can be included in read only memory, programmable read only memory, electrically programmable read only memory, electrically erasable programmable read only memory, or flash memory. Volatile memory can include random access memory, which acts as external cache memory. By way of illustration and not limitation, random access memory is available in many forms such as synchronous random access memory, dynamic random access memory, synchronous dynamic random access memory, double data rate synchronous dynamic random access memory, enhanced synchronous dynamic random access memory, Synchlink dynamic random access memory, and direct Rambus random access memory. Additionally, the disclosed memory components of systems or methods herein are intended to include, without being limited to including, these and any other suitable types of memory.

Examples can include subject matter such as a method, means for performing acts or blocks of the method, at least one machine-readable medium including instructions that, when performed by a machine cause the machine to perform acts of the method or of an apparatus or system for concurrent communication using multiple communication technologies according to embodiments and examples described herein.

It is to be understood that aspects described herein can be implemented by hardware, software, firmware, or any combination thereof. When implemented in software, functions can be stored on or transmitted over as one or more instructions or code on a computer-readable medium. Computer-readable media includes both computer storage media and communication media including any medium that facilitates transfer of a computer program from one place to another. A storage media or a computer readable storage device (e.g., memory 824) can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or other tangible and/or non-transitory medium, that can be used to carry or store desired information or executable instructions. Also, any connection is properly termed a computer-readable medium. For example, if software is transmitted from a website, server, or other remote source using a coaxial cable, fiber optic cable, twisted pair, digital subscriber line (DSL), or wireless technologies such as infrared, radio, and microwave, then coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

Various illustrative logics, logical blocks, modules, and circuits described in connection with aspects disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform functions described herein. A general-purpose processor can be a microprocessor, but, in the alternative, processor can be any conventional processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration. Additionally, at least one processor can comprise one or more modules operable to perform one or more of the s and/or actions described herein.

For a software implementation, techniques described herein can be implemented with modules *(e.g*., procedures, functions, and so on) that perform functions described herein. Software codes can be stored in memory units and executed by processors. Memory unit can be implemented within processor or external to processor, in which case memory unit can be communicatively coupled to processor through various means as is known in the art. Further, at least one processor can include one or more modules operable to perform functions described herein.

Techniques described herein can be used for various wireless communication systems such as CDMA, TDMA, FDMA, OFDMA, SC-FDMA and other systems. The terms "system" and "network" are often used interchangeably. A CDMA system can implement a radio technology such as Universal Terrestrial Radio Access (UTRA), CDMA7800, *etc.* UTRA includes Wideband-CDMA (W-CDMA) and other variants of CDMA. Further, CDMA7800 covers IS-7800, IS-95 and IS-856 standards. A TDMA system can implement a radio technology such as Global System for Mobile Communications (GSM). An OFDMA system can implement a radio technology such as Evolved UTRA (E-UTRA), Ultra Mobile Broadband (UMB), IEEE 802.77 (Wi-Fi), IEEE 802.76 (WiMAX), IEEE 802.78, Flash-OFDML, *etc.* UTRA and E-UTRA are part of Universal Mobile Telecommunication System (UMTS). 3GPP Long Term Evolution (LTE) is a release of UMTS that uses E-UTRA, which employs OFDMA on downlink and SC-FDMA on uplink. UTRA, E-UTRA, UMTS, LTE and GSM are described in documents from an organization named "3rd Generation Partnership Project" (3GPP). Additionally, CDMA7800 and UMB are described in documents from an organization named "3rd Generation Partnership Project 2" (3GPP2). Further, such wireless communication systems can additionally include peer-to-peer (*e.g.*, mobile-to-mobile) *ad hoc* network systems often using unpaired unlicensed spectrums, 802.xx wireless LAN, BLUETOOTH and any other short- or long- range, wireless communication techniques.

Single carrier frequency division multiple access (SC-FDMA), which utilizes single carrier modulation and frequency domain equalization is a technique that can be utilized with the disclosed aspects. SC-FDMA has similar performance and essentially a similar overall complexity as those of OFDMA system. SC-FDMA signal has lower peak-to-average power ratio (PAPR) because of its inherent single carrier structure. SC-FDMA can be utilized in uplink communications where lower PAPR can benefit a mobile terminal in terms of transmit power efficiency.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (*e.g.,* hard disk, floppy disk, magnetic strips, *etc.),* optical disks (*e.g.,* compact disk (CD), digital versatile disk (DVD), *etc.),* smart cards, and flash memory devices (*e.g.,* EPROM, card, stick, key drive, *etc.).* Additionally, various storage media described herein can represent one or more devices and/or other machine-readable media for storing information. The term "machine-readable medium" can include, without being limited to, wireless channels and various other media capable of storing, containing, and/or carrying instruction(s) and/or data. Additionally, a computer program product can include a computer readable medium having one or more instructions or codes operable to cause a computer to perform functions described herein.

Communications media embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

Further, the actions of a method or algorithm described in connection with aspects disclosed herein can be embodied directly in hardware, in a software module executed by a processor, or a combination thereof. A software module can reside in RAM memory, flash memory, ROM memory, EPROM memory, EEPROM memory, registers, a hard disk, a removable disk, a CD-ROM, or any other form of storage medium known in the art. An exemplary storage medium can be coupled to processor, such that processor can read information from, and write information to, storage medium. In the alternative, storage medium can be integral to processor. Further, in some aspects, processor and storage medium can reside in an ASIC. Additionally, ASIC can reside in a user terminal. In the alternative, processor and storage medium can reside as discrete components in a user terminal. Additionally, in some aspects, the s and/or actions of a method or algorithm can reside as one or any combination or set of codes and/or instructions on a machine-readable medium and/or computer readable medium, which can be incorporated into a computer program product.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the disclosed subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

In particular regard to the various functions performed by the above described components (assemblies, devices, circuits, systems, *etc.),* the terms (including a reference to a "means") used to describe such components are intended to correspond, unless otherwise indicated, to any component or structure which performs the specified function of the described component (*e.g.*, that is functionally equivalent), even though not structurally equivalent to the disclosed structure which performs the function in the herein illustrated exemplary implementations of the disclosure. In addition, while a particular feature may have been disclosed with respect to only one of several implementations, such feature may be combined with one or more other features of the other implementations as may be desired and advantageous for any given or particular application.

## Claims

1. An apparatus configured to be employed in a base station comprising:
one or more processors (704a, 704b, 704c, 704d) configured to:
process (502) from a next generation, NextGen, core network (406) one or more pre-authorized Quality of Service, QoS, rules for use over
a Radio Access Network, RAN, based on a 5G Radio Access Technology, RAT, (410), or
an evolved Universal Mobile Telecommunications System Terrestrial Radio Access, E-UTRA, (408) configured to connect to the NextGen core network (406);
provide (504) the one or more pre-authorized QoS rules to a 5G user equipment, UE, (414, 416); and
include an indication of a reflective QoS in a header of a downlink data unit, wherein the reflective QoS requires the 5G UE (102) to apply a same QoS of the downlink data unit for a corresponding uplink flow.

2. The apparatus of any one of claims 1, wherein the one or more pre-authorized QoS rules comprise a QoS marking that is used within an encapsulation header over a user plane interface (NG₃) between the RAN based on the 5G RAT (410) and the NextGen core network (406).

3. The apparatus of any one of claims 1-2, wherein the one or more processors (704a, 704b, 704c, 704d) are further configured to initiate a radio bearer based on a QoS marking or a flow priority indicator, FPI, received within an encapsulation header related to a user plane interface (NG₃) between the RAN based on the 5G RAT and the NextGen core network.

4. An apparatus configured to be employed in a 5G user equipment, UE, (414, 416) comprising:
one or more processors (704a, 704b, 704c, 704d) configured to:
process one or more pre-authorized Quality of Service, QoS, rules over a Radio Access Network, RAN, based on
a 5G Radio Access Technology, RAT, (410), or
an evolved Universal Mobile Telecommunications System Terrestrial Radio Access, E-UTRA, (408) configured to connect to a Next-Generation, NextGen, core network (406); and
process an indication of the reflective QoS from the DL traffic flow and request the same QoS in the UL traffic flow in response to receiving the indication and a QoS marking in a header of a downlink data unit.

5. The apparatus of any one of claim 4, wherein the one or more processors (704a, 704b, 704c, 704d) are further configured to process a QoS marking received in a PDCP header, a RLC header, or a MAC header to determine the QoS on a direct interface comprising a device-to-device, D2D, interface and relay a DL traffic flow via the D2D interface.

6. The apparatus of any one of claims 4-5, wherein the one or more processors (704a, 704b, 704c, 704d) are further configured to generate a buffer status reporting for a request of one or more UL transmission grants based on a QoS marking or a QoS marking group, related to the one or more pre-authorized QoS rules, wherein the buffer status reporting comprises a number of UL packets or bytes of data that correspond respectively to different FPIs or different FPI groups.

7. A computer-readable medium storing executable instructions that, in response to execution, cause one or more processors (704a, 704b, 704c, 704d) of an evolved NodeB, eNB, to perform operations, comprising:
processing from a Next-Generation, NextGen, core network (406) one or more pre-authorized Quality of Service, QoS, rules for use over
a Next-Generation, NexGen, Radio Access Network, RAN, (410), or
an evolved Universal Mobile Telecommunications System Terrestrial Radio Access, E-UTRA, (408) configured to connect to the NextGen core network (406); and
including an indication of a reflective QoS in a header of a downlink data unit, wherein the reflective QoS requires the 5G UE (102) to apply the same QoS of the downlink data unit for a corresponding uplink flow; and
providing the one or more pre-authorized QoS rules to a 5G user equipment, UE, (414, 416) to enable the UE to initiate data radio bearers for support of traffic flow that is pre-authorized by the one or more pre-authorized QoS rules.

## Patentansprüche

1. Vorrichtung, die dazu konfiguriert ist, um in einer Basisstation verwendet zu werden, umfassend:
einen oder mehrere Prozessoren (704a, 704b, 704c, 704d), die konfiguriert sind zum:
Verarbeiten (502) von einem Kernnetzwerk der nächsten Generation, NextGen, (406) eine oder mehrere vorautorisierte Dienstgüte, Quality of Service - QoS, -Regeln für die Verwendung über
ein Funkzugangsnetz, Radio Access Network - RAN, basierend auf einer 5G Funkzugangstechnologie, Radio Access Technology - RAT, (410) oder
einen terrestrischen Funkzugang des weiterentwickelten universellen mobilen Telekommunikationssystems, evolved Universal Mobile Telecommunications System Terrestrial Radio Access - E-UTRA, (408), der konfiguriert ist, um sich mit dem NextGen Kernnetzwerk (406) zu verbinden;
Bereitstellen (504) der einen oder mehreren vorautorisierten QoS Regeln an ein 5G Benutzergerät, user equipment - UE, (414, 416); und
Einschließen einer Anzeige einer reflektierenden QoS, reflective QoS, in einem Header einer Downlink Dateneinheit, wobei die reflektierende QoS erfordert, dass das 5G UE (102) dieselbe QoS der Downlink-Dateneinheit für einen entsprechenden Uplink Fluss anwendet.

2. Vorrichtung nach Anspruch 1, wobei die eine oder mehreren vorautorisierten QoS Regeln eine QoS Markierung umfassen, die innerhalb eines Kapselungs-Headers, encapsulation header, über eine Benutzerebenenschnittstelle, user plane interface, (NG₃) zwischen dem RAN basierend auf der 5G RAT (410) und dem NextGen Kernnetzwerk (406) verwendet wird.

3. Vorrichtung nach einem der Ansprüche 1 bis 2, wobei der eine oder die mehreren Prozessoren (704a, 704b, 704c, 704d) ferner konfiguriert sind, um einen Funkträger, radio bearer, basierend auf einer QoS Markierung oder einem Flussprioritätsindikator, flow priority indicator - FPI, zu initiieren, der innerhalb eines Kapselungs-Headers, der sich auf eine Benutzerebenenschnittstelle (NG₃) zwischen dem RAN basierend auf der 5G RAT und dem NextGen Kernnetzwerk bezieht, empfangen wird.

4. Vorrichtung, die dazu konfiguriert ist, um in einem 5G Benutzergerät, UE, (414, 416) verwendet zu werden, umfassend:
einen oder mehrere Prozessoren (704a, 704b, 704c, 704d), die konfiguriert sind, zum:
Verarbeiten einer oder mehrerer vorautorisierten Dienstgüte, Quality of Service - QoS, -Regeln über ein 5G Funkzugangsnetz, Radio Access Network - RAN, basierend auf
einer 5G Funkzugangstechnologie, Radio Access Technology - RAT, (410) oder
einem terrestrischen Funkzugang des weiterentwickelten universellen mobilen Telekommunikationssystems, evolved Universal Mobile Telecommunications System Terrestrial Radio Access - E-UTRA, (408), der konfiguriert ist, um sich mit dem NextGen Kernnetzwerk (406) zu verbinden; und
Verarbeiten einer Anzeige einer reflektierenden QoS, reflective QoS, von dem DL Verkehrsfluss und anfordern derselben QoS in dem UL Verkehrsfluss in Antwort auf ein Empfangen der Anzeige und einer QoS Markierung in einem Header einer Downlink Dateneinheit.

5. Vorrichtung nach Anspruch 4, wobei der eine oder die mehreren Prozessoren (704a, 704b, 704c, 704d) ferner dazu konfiguriert sind, eine QoS Markierung zu verarbeiten, die in einem PDCP Header, einem RLC Header oder einem MAC Header empfangen wird, um die QoS auf einer direkten Schnittstelle, die eine Gerät-zu-Gerät-, device-to-device - D2D, Schnittstelle umfasst, zu bestimmen, und Weiterleiten eines DL Verkehrsflusses über die D2D Schnittstelle.

6. Vorrichtung nach einem der Ansprüche 4 bis 5, wobei der eine oder die mehreren Prozessoren (704a, 704b, 704c, 704d) ferner konfiguriert sind, um eine Pufferstatusmeldung für eine Anforderung einer oder mehrerer UL Übertragungsgewährungen basierend auf einer QoS Markierung oder einer QoS Markierungsgruppe, bezogen auf die eine oder die mehreren vorautorisierten QoS Regeln, zu erzeugen, wobei die Pufferstatusmeldung eine Anzahl von UL Paketen oder Datenbytes umfasst, die jeweils unterschiedlichen FPIs oder unterschiedlichen FPI Gruppen entsprechen.

7. Computerlesbares Medium, das ausführbare Anweisungen speichert, die als Reaktion auf die Ausführung einen oder mehrere Prozessoren (704a, 704b, 704c, 704d) eines weiterentwickelten NodeB, evolved NodeB - eNB, veranlassen, Operationen durchzuführen, die folgendes umfassen:
Verarbeiten von einem Kernnetzwerk der nächsten Generation, NextGen, (406) einer oder mehrerer vorautorisierten Dienstgüte, Quality of Service - QoS, -Regeln für die Verwendung über
ein Funkzugangsnetz, Radio Access Network - RAN, der nächsten Generation, NextGen, (410) oder
einen terrestrischen Funkzugang des weiterentwickelten universellen mobilen Telekommunikationssystems, evolved Universal Mobile Telecommunications System Terrestrial Radio Access - E-UTRA, (408), der konfiguriert ist, um sich mit dem NextGen-Kernnetzwerk (406) zu verbinden; und
Einschließen einer Anzeige einer reflektierenden QoS, reflective QoS, in einem Header einer Downlink-Dateneinheit, wobei die reflektierende QoS erfordert, dass das 5G UE (102) dieselbe QoS der Downlink Dateneinheit für einen entsprechenden Uplink Fluss anwendet; und
Bereitstellen der einen oder mehreren vorautorisierten QoS-Regeln an ein 5G Benutzergerät, user equipment - UE, (414, 416), um es dem UE zu ermöglichen, Datenfunkträger, data radio bearers, zur Unterstützung des Verkehrsflusses zu initiieren, der durch den einen oder die mehreren vorautorisierten QoS-Regeln vorautorisiert ist.

## Revendications

1. Un appareil configuré pour être employé dans une station de base comprenant :
un ou plusieurs processeurs (704a, 704b, 704c, 704d) configurés pour :
traiter (502), à partir d'un réseau central de prochaine génération, NextGen, (406),
une ou plusieurs règles de qualité de service, QoS, pré-autorisées pour l'utilisation sur
un réseau d'accès radio, RAN, basé sur une technologie d'accès radio, RAT, 5G (410), ou
un accès radio terrestre de système de télécommunication mobile universel évolué, E-UTRA, (408) configuré pour se connecter au réseau central NextGen (406) ;
délivrer (504) les une ou plusieurs règles de QoS pré-autorisées à un équipement utilisateur, UE, 5G (414, 416) ; et
inclure une indication d'une QoS réflective dans un en-tête d'une unité de donnée de liaison descendante, dans lequel la QoS réflective requiert que l'UE 5G (102) applique une même QoS de l'unité de donnée de liaison descendante pour un flux de liaison montante correspondant.

2. L'appareil selon la revendication 1, dans lequel les une ou plusieurs règles de QoS pré-autorisées comprennent un marquage de QoS qui est utilisé dans un en-tête d'encapsulation sur une interface de plan utilisateur (NG₃) entre le RAN basé sur la RAT 5G (410) et le réseau central NextGen (406).

3. L'appareil selon une des revendications 1 à 2, dans lequel les un ou plusieurs processeurs (704a, 704b, 704c, 704d) sont configurés en outre pour initier un bearer radio sur la base d'un marquage de QoS ou d'un indicateur de priorité de flux, FPI, reçu dans un en-tête d'encapsulation relatif à une interface de plan utilisateur (NG₃) entre le RAN basé sur la RAT 5G et le réseau central NextGen.

4. Un appareil configuré pour être employé dans un équipement utilisateur, UE, 5G (414, 416) comprenant :
un ou plusieurs processeurs (704a, 704b, 704c, 704d) configurés pour :
traiter une ou plusieurs règles de qualité de service, QoS, pré-autorisées sur un réseau d'accès radio, RAN, basé sur
une technologie d'accès radio, RAT, 5G (410), ou
un accès radio terrestre de système de télécommunication mobile universel évolué, E-UTRA, (408) configuré pour se connecter à un réseau central de prochaine génération, NextGen, (406) ; et
traiter une indication de la QoS réflective provenant du flux de trafic DL et requérir la même QoS dans le flux de trafic UL en réponse à la réception de l'indication et d'un marquage de QoS dans un en-tête d'une unité de donnée de liaison descendante.

5. L'appareil selon la revendication 4, dans lequel les un ou plusieurs processeurs (704a, 704b, 704c, 704d) sont configurés en outre pour traiter un marquage de QoS reçu dans un en-tête PDCP, un en-tête RLC ou un en-tête MAC pour déterminer la QoS sur une interface directe comprenant une interface de dispositif à dispositif, D2D, et relayer un flux de trafic DL via l'interface D2D.

6. L'appareil selon une des revendications 4 à 5, dans lequel les un ou plusieurs processeurs (704a, 704b, 704c, 704d) sont configurés en outre pour générer un rapport d'état de mémoire tampon pour une requête d'une ou plusieurs permissions de transmission UL sur la base d'un marquage de QoS ou d'un groupe de marquages de QoS, relatif aux une ou plusieurs règles de QoS pré-autorisées, dans lequel le rapport d'état de mémoire tampon comprend un nombre de paquets d'UL ou d'octets de donnée qui correspondent respectivement à différents FPI ou différents groupes de FPI.

7. Un support lisible par calculateur stockant des instructions exécutables qui, en réponse à une exécution, amènent un ou plusieurs processeurs (704a, 704b, 704c, 704d) d'un nœud B évolué, eNB, pour réaliser des opérations comprenant :
le traitement, à partir d'un réseau central de prochaine génération, NextGen, (406),
d'une ou plusieurs règles de qualité de service, QoS, pré-autorisées pour l'utilisation sur
un réseau d'accès radio, RAN, de prochaine génération, NextGen, (410), ou
un accès radio terrestre de système de télécommunication mobile universel évolué, E-UTRA, (408) configuré pour se connecter au réseau central NextGen (406) ; et
l'inclusion d'une indication d'une QoS réflective dans un en-tête d'une unité de donnée de liaison descendante, dans lequel la QoS réflective requiert que l'UE 5G (102) applique la même QoS de l'unité de donnée de liaison descendante pour un flux de liaison montante correspondant ; et
la délivrance des une ou plusieurs règles de QoS pré-autorisées à un équipement utilisateur, UE, 5G (414, 416) pour permettre à l'UE d'initier des bearers radio de données pour prendre en charge un flux de trafic qui est pré-autorisé par les une ou plusieurs règles de QoS pré-autorisées.
